# EUROPEAN PATENT SPECIFICATION

(11) **EP 3 533 694 B1**
(45) Date of publication and mention of the grant of the patent: **02.12.2020**
(21) Application number: 19158180.0
(22) Date of filing: 20.02.2019
(51) Int. Cl.: B62J 17/02, B62J 17/04

(54) **BLINKER LAMP MOUNTING STRUCTURE OF SADDLED VEHICLE**
BLINKERLEUCHTENMONTAGESTRUKTUR EINES SATTELFAHRZEUGS
STRUCTURE DE MONTAGE DE FEU CLIGNOTANT DE VÉHICULE À ENFOURCHER

(30) Priority: 28.02.2018 JP 2018034973; 19.09.2018 JP 2018175435
(43) Date of publication of application: 04.09.2019
(73) Proprietor: Honda Motor Co., Ltd., Tokyo 107-8556 (JP)
(72) Inventor: Haraguchi, Hideaki, Saitama, 351-0193 (JP); Kurogi, Nobuyuki, Saitama, 351-0193 (JP); Sasaki, Tomohiko, Saitama, 351-0193 (JP); Uemae, Takeshi, Saitama, 351-0193 (JP); Katagiri, Kiyoshi, Saitama, 351-0193 (JP)
(74) Representative: Kiwit, Benedikt

(56) References cited:
- EP-A1- 2 757 029
- JP-A- 2006 182 140
- JP-U- S57 184 074

## Description

### Technical Field

The present invention relates to a blinker lamp mounting structure of a saddled vehicle, and more particularly to a pair of left and right blinker lamp mounting structures mounted on a front side of the saddled vehicle.

### Background Art

In a saddled vehicle such as a motorcycle, there has been known a structure where a blinker lamp including a lamp is mounted on distal ends of a stay extending toward left and right outer sides in a vehicle width direction respectively on a front portion of a vehicle body.

Patent literature 1 discloses a motorcycle where mounting portions respectively formed of a through hole are formed on left and right side surfaces of a front cowl which supports a headlight, and blinker lamps are supported by the mounting portions

Further alternatives of blinker mounting portions are disclosed in Patent Literature 2, 3 and 4, being the preamble of claim 1 disclosed in Patent Literature 2.

### Citation List

### Patent Literature

Patent Literature 1: JP-A No. 2014-139029
Patent Literature 2: EP 2 757 029 A1
Patent Literature 3: JP S57 184074 U
Patent Literature 4: JP 2006 182140 A

### Summary of Invention

### Technical Problem

When a saddled vehicle travels on a closed course or the like, there may be a case where blinker lamps are removed from a vehicle body for reducing a weight of the saddled vehicle or for preventing breaking of the blinker lamps. In the blinker lamp mounting structure disclosed in patent literature 1, mounting portions formed on a front cowl are exposed to the outside by removing the blinker lamps. Accordingly, the saddled vehicle has drawbacks that external appearance of the saddled vehicle is lowered, and the structure affects a flow straightening effect brought about by the front cowl.

Accordingly, it is an object of the present invention to provide a blinker lamp mounting structure of a saddled vehicle which can reduce lowering of external appearance and an adverse effect to a flow straightening effect of a front cowl when a blinker lamp is removed.

### Solution to Problems

To achieve the afore-mentioned object, in a blinker lamp mounting structure of a saddled vehicle applied to a saddled vehicle (1) having a front cowl (13) disposed in contact with an outer edge of a headlight (14), an inner panel (50) disposed in a vicinity of a back surface side of the front cowl (13) and supporting a meter device (8), and a pair of left and right blinker lamps (11), the present invention has a first feature that an exposed portions (58) which is not covered by the front cowl (13) as viewed in a side view of a vehicle body is formed on the inner panel (50), and a mounting hole (59) of the blinker lamp (11) is formed in the exposed portion (58).

The present invention has a second feature in that a protruding portion (53) formed by making two flat surfaces (53a,53b) butt against each other is disposed in a vicinity of the mounting hole (59) of the inner panel (50).

The present invention has a third feature in that the exposed portion (58) is configured to have a peak portion (58a) having an acute angle and directed toward a front side of the vehicle body as viewed in the side view of the vehicle body.

The present invention has a fourth feature in that a steering handlebar (6) for steering a front wheel (WF) of the saddled vehicle (1) is disposed at a position behind the headlight (14) in a longitudinal direction of the vehicle body and above the headlight (14) in a vertical direction of the vehicle body, and the blinker lamp (11) is disposed between the headlight (14) and the steering handlebar (6) as viewed in the side view of the vehicle body.

The present invention has a fifth feature in that a bent portion (A) for guiding traveling air (W) from a front side of the vehicle body upward and rearward is formed below the blinker lamps (11).

The present invention has a sixth feature in that a pair of left and right openings (52) is formed on a rear side of the protruding portions (53) in a longitudinal direction of the vehicle body.

The present invention has a seventh feature in that the exposed portion (58) is formed in a planar shape directed toward an outside in a vehicle width direction.

The present invention has an eighth feature in that the blinker lamp (11) is supported by the mounting hole (59) by way of an elastic member (60), a circumferential groove (66) which engages with the mounting hole (59) is formed in the elastic member (60), the circumferential groove (66) is formed smaller than the mounting hole (59), a plurality of engaging portions (67) which extend toward an outside in a radial direction are formed on a bottom surface (66a) of the circumferential groove (66), and a plurality of holding portions (81) which extend toward an inside in a radial direction and are brought into contact with the engaging portions (67) are formed on an inner peripheral surface (59a) of the mounting hole (59).

The present invention has a ninth feature in that a recessed portion (66b) is formed on at least a portion of a side surface of the circumferential groove (66) on an outer side in the vehicle width direction contiguously formed with a bottom surface (66a) of the circumferential groove (66).

The present invention has a tenth feature in that a through hole (64) through which a fastening member (100) for supporting the blinker lamp (11) passes is formed in the elastic member (60), and a plurality of slits (64b) extending toward an outside in a radial direction are formed on an inner peripheral surface (64a) of the through hole (64).

The present invention has an eleventh feature in that the circumferential groove (66) formed in the elastic member (60) is formed between a body portion (61) which holds the blinker lamp (11) on an outer side in the vehicle width direction and a thin-plate-like flange portion (63) disposed on an inner side in the vehicle width direction.

### Advantageous Effects of Invention

According to the first technical feature, the exposed portions (58) which is not covered by the front cowl (13) as viewed in the side view of the vehicle body is formed on the inner panel (50), and the mounting hole (59) of the blinker lamp (11) is formed in the exposed portion (58), in a blinker lamp mounting structure of a saddled vehicle applied to a saddled vehicle (1) having a front cowl (13) disposed in contact with an outer edge of a headlight (14), an inner panel (50) disposed in a vicinity of a back surface side of the front cowl (13) and supporting a meter device (8), and a pair of left and right blinker lamps (11). Therefore, it is possible to enhance maintenance property compared to the configuration where mounting holes for the blinker lamps are provided in a cowling such as a front cowl. Further, when the blinker lamps are removed from the mounting holes, the mounting holes become inconspicuous, and it is possible to prevent the mounting holes from affecting a flow straightening effect brought about by the cowling.

According to the second technical feature, the protruding portion (53) formed by making two flat surfaces (53a,53b) butt against each other is disposed in a vicinity of the mounting hole (59) of the inner panel (50). Therefore, rigidity of the inner panel can be maintained even when the mounting holes are formed in the inner panel.

According to the third technical feature, the exposed portion (58) is configured to have a peak portion (58a) having an acute angle and directed toward a front side of the vehicle body as viewed in the side view of the vehicle body. Therefore, it is possible to impart a sharp impression on an external appearance of the exposed portion. Further, a portion having a convex shape directed toward the front side in the longitudinal direction of the vehicle body is formed on the front cowl in conformity with the shape of the exposed portion and hence, the exposed portion can have an external appearance where the blinker lamp is accommodated in an approximately triangular space sandwiched by edge portions of the front cowl.

According to the fourth technical feature, the steering handlebar (6) for steering a front wheel (WF) of the saddled vehicle (1) is disposed at a position behind the headlight (14) in a longitudinal direction of the vehicle body and above the headlight (14) in a vertical direction of the vehicle body, and the blinker lamp (11) is disposed between the headlight (14) and the steering handlebar (6) as viewed in the side view of the vehicle body. Therefore, traveling air is diffused by the blinker lamp and hence, traveling air which impinges on the steering handlebar can be reduced.

According to the fifth technical feature, the bent portion (A) for guiding traveling air (W) from a front side of the vehicle body upward and rearward is formed below the blinker lamps (11). Therefore, traveling air impinges on the bent portion and hence, a flow path of traveling air directed from the bent portion toward the steering handlebar disposed behind and above can be dispersed by the blinker lamps. Accordingly, an amount of traveling air which impinges on the steering handlebar can be reduced and hence, air resistance can be reduced whereby riding comfortability can be improved.

According to the sixth technical feature, the pair of left and right openings (52) is formed on a rear side of the protruding portions (53) in a longitudinal direction of the vehicle body. Therefore, the reduction of a weight of the inner panel can be realized by forming the openings while maintaining rigidity of the inner panel by the protruding portion. Further, the openings are formed behind the headlight and hence, these openings can be used as maintenance openings for performing optical axis adjustment.

According to the seventh technical feature, the exposed portion (58) is formed in a planar shape directed toward an outside in a vehicle width direction. Therefore, mounting and removing operations of the blinker lamp can be performed easily.

According to the eighth technical feature, the blinker lamp (11) is supported by the mounting hole (59) by way of an elastic member (60), a circumferential groove (66) which engages with the mounting hole (59) is formed in the elastic member (60), the circumferential groove (66) is formed smaller than the mounting hole (59), a plurality of engaging portions (67) which extend toward an outside in a radial direction are formed on a bottom surface (66a) of the circumferential groove (66), and a plurality of holding portions (81) which extend toward an inside in a radial direction and are brought into contact with the engaging portions (67) are formed on an inner peripheral surface (59a) of the mounting hole (59). Therefore, the blinker lamp is supported by the elastic member and hence, it is possible to protect the blinker lamp from vibrations. Further, the configuration is adopted where the circumferential groove formed on the elastic member engages with the mounting hole and hence, positioning of the elastic member and mounting of the elastic member in the mounting hole and removal of the elastic member on and from the mounting hole can be performed easily.

Further, by making the elastic member and the mounting hole engage with each other due to the engagement relationship between the engaging portion and the holding portion and hence, positioning of the elastic member and the mounting hole can be performed, and an engagement state between the elastic member and the mounting hole can be easily released when an external force is applied to the blinker lamp from the outside in the vehicle width direction. Accordingly, when an external force is applied to the blinker lamp from the outside in the vehicle width direction, the blinker lamp easily retracts toward the inside in the vehicle width direction and hence, the blinker lamp can be protected.

According to the ninth technical feature, the recessed portion (66b) is formed on at least a portion of a side surface of the circumferential groove (66) on an outer side in the vehicle width direction contiguously formed with a bottom surface (66a) of the circumferential groove (66). Therefore, when an external force is applied to the blinker lamp from the outside in the vehicle width direction, a portion of the outer side of the circumferential groove in the vehicle width direction is easily deformed and hence, the blinker lamp can be smoothly moved toward the inside in the vehicle width direction. Further, the recessed portion is disposed at the position where the recessed portion cannot be visually recognized from the outside when the elastic member engages with the mounting hole and hence, rigidity of the elastic member can be adjusted without affecting an external appearance of the saddled vehicle.

According to the tenth technical feature, the through hole (64) through which a fastening member (100) for supporting the blinker lamp (11) passes is formed in the elastic member (60), and a plurality of slits (64b) extending toward an outside in a radial direction are formed on an inner peripheral surface (64a) of the through hole (64). Therefore, the inner peripheral surface of the through hole can be easily deformed and hence, when an external force is applied to the blinker lamp, a force applied to the blinker lamp can be released.

According to the eleventh technical feature, the circumferential groove (66) formed in the elastic member (60) is formed between a body portion (61) which holds the blinker lamp (11) on an outer side in the vehicle width direction and a thin-plate-like flange portion (63) disposed on an inner side in the vehicle width direction. Therefore, the flange portion can be deformed easily and hence, an operation of mounting the elastic member in the mounting hole can be performed easily.

### Brief Description of Drawings

FIG. 1 is a left side view of a motorcycle to which a blinker lamp mounting structure of a saddled vehicle according to one embodiment of the present invention is applied.
FIG. 2 is a front view of the motorcycle.
FIG. 3 is a partially enlarged left side view of the motorcycle.
FIG. 4 is a partially enlarged perspective view of the motorcycle as viewed by occupant's eyes.
FIG. 5 is a view showing only the inner panel as viewed from occupant's eyes.
FIG. 6 is a plan view of the inner panel.
FIG. 7 is a left side view of the inner panel
FIG. 8 is a front view of the inner panel.
FIG. 9 is a partially enlarged perspective view of the motorcycle.
FIG. 10 is a cross-sectional view taken along a line X-X in FIG. 3.
FIG. 11 is an enlarged perspective view of the steering handlebar
FIG. 12 is a cross-sectional view of a mounting portion of the blinker lamp.
FIG. 13 is a left side view of the elastic member on a left side in the vehicle width direction.
FIG. 14 is a back surface view of the elastic member.
FIG. 15 is a cross-sectional view taken along a line XV-XV in FIG. 14.
FIG. 16 is a cross-sectional view taken along a line XVI-XVI in FIG. 13.
FIG. 17 is an enlarged view of the mounting hole.
FIG. 18 is a partially cross-sectional view showing a state where the elastic member is mounted in the mounting hole.

### Description of Embodiments

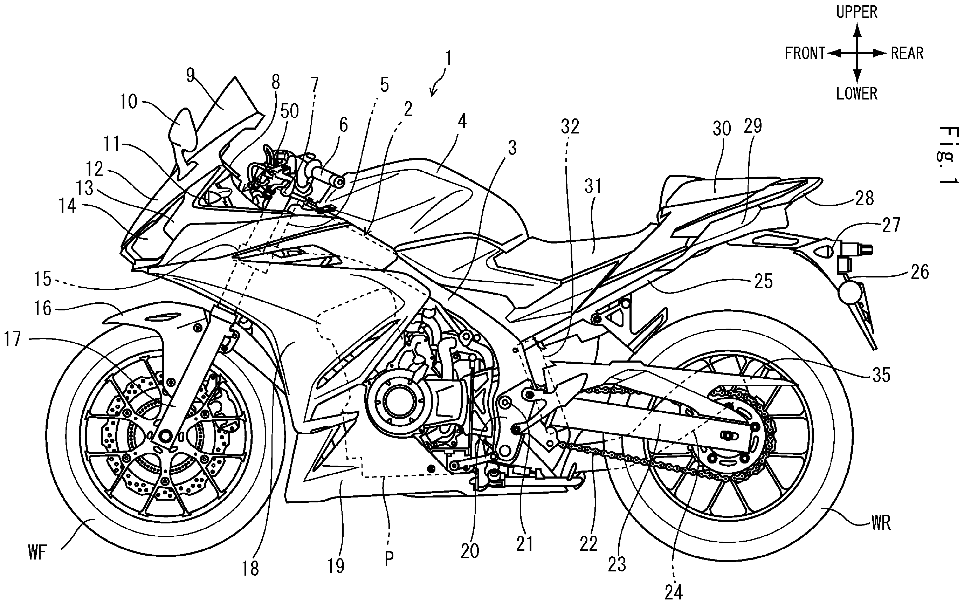

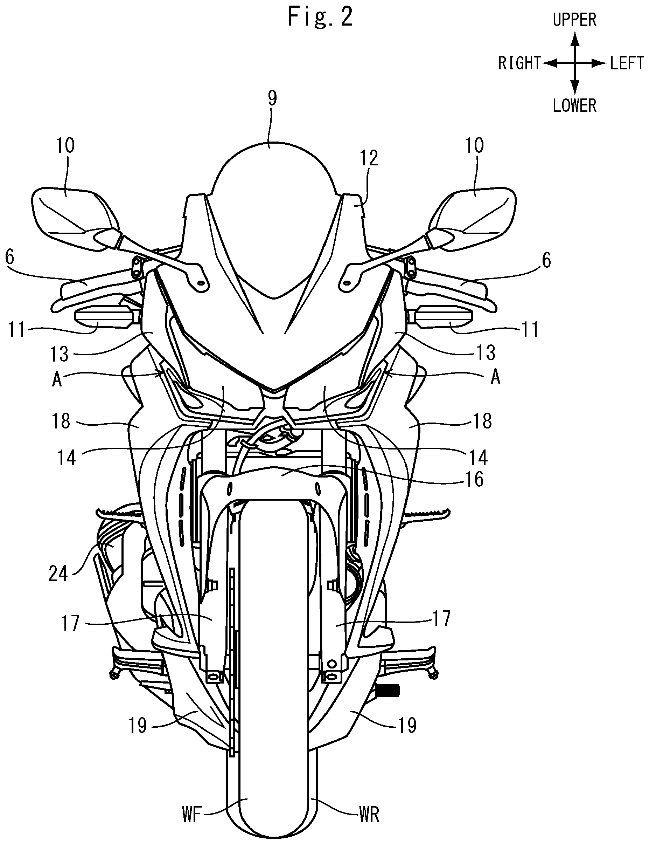

FIG. 1 is a left side view of a motorcycle 1 to which a blinker lamp mounting structure of a saddled vehicle according to one embodiment of the present invention is applied. FIG. 2 is a front view of the motorcycle 1.

A body frame 2 of the motorcycle 1 which forms a saddled vehicle includes a pair of left and right main pipes 3 which extends toward a lower side and a rear side of the vehicle body from a head pipe 5. A pair of left and right pivot plates 20 on which a pivot 21 pivotally supporting a swing arm 23 in a swingable manner is mounted is connected to a rear end lower portion of the main pipe 3. A steering stem (not shown in the drawing) is pivotally supported on the head pipe 5 in a rotatable manner. To an upper side and a lower side of the steering stem, a top bridge 7 and a bottom bridge 15 which support a pair of left and right front forks 17 are fixed respectively. A pair of left and right steering handlebar(s) 6 is mounted on a lower portion of the top bridge 7.

A front wheel WF is pivotally supported on lower end portions of the front forks 17 in a rotatable manner. A front fender 16 which covers the front wheel WF from above is supported on the front forks 17. A power unit P which is an integral body formed of a parallel four-cylinder four-cycle engine and a transmission is disposed on a lower side of the body frame 2 in a suspended manner. The swing arm 23 which is pivotally supported on the pivot 21 in a swingable manner is suspended from the body frame 2 by way of a rear cushion 32.

A rotational drive force of the power unit P is transmitted to a rear wheel WR by way of a drive chain 22. A chain cover 35 which covers the drive chain 22 from above is mounted on an upper portion of the swing arm 23. A combustion gas produced in the power unit P is guided to a muffler 24 disposed on a right side of the power unit P in a vehicle width direction.

A fuel tank 4 is disposed on an upper portion of the body frame 2. A front seat 31 which is supported on a rear frame 25 is disposed on a rear portion of the fuel tank 4. A seat cowl 29 which supports a rear seat 30 and a tail light 28 is disposed behind the front seat 31. A rear fender 26 which supports rear blinker lamps 27 is mounted on a lower side of the seat cowl 29.

A center cowl 12 which supports a wind screen 9 and a rear-view mirror 10 is disposed in front of the head pipe 5. A pair of left and right headlights 14 is disposed on a lower portion of the center cowl 12. A pair of left and right front cowls 13 is disposed outside the headlights 14 in the vehicle width direction. A pair of left and right side cowls 18 which covers outer sides of the front forks 17 in the vehicle width direction is connected to lower portions of the front cowls 13. Under cowls 19 which cover a lower portion of the power unit P are connected to lower portions of the side cowls 18.

As viewed in a front view of the vehicle body, outer edge portions of the headlights 14 are brought into contact with the center cowl 12, the front cowls 13 and the side cowls 18. Bent portions A which are recessed inward in the vehicle width direction are formed on portions of the side cowls 18 in the vicinity of upper ends of the side cowls 18. All of the respective cowls are formed of a thin-plate-like member made of a synthetic resin or the like. The center cowl 12, the front cowls 13, and portions of or the whole side cowls 18 may be integrally formed with each other thus forming an integral cowling.

On a back surface side of the center cowl 12 and the front cowl 13, an inner panel 50 which supports a meter device 8 is disposed adjacently to these members. On outer end portions of the inner panel 50 in the vehicle width direction, a pair of left and right front blinker lamps 11 is mounted. The blinker lamp mounting structure according to the present invention is applied to these front blinker lamps 11.

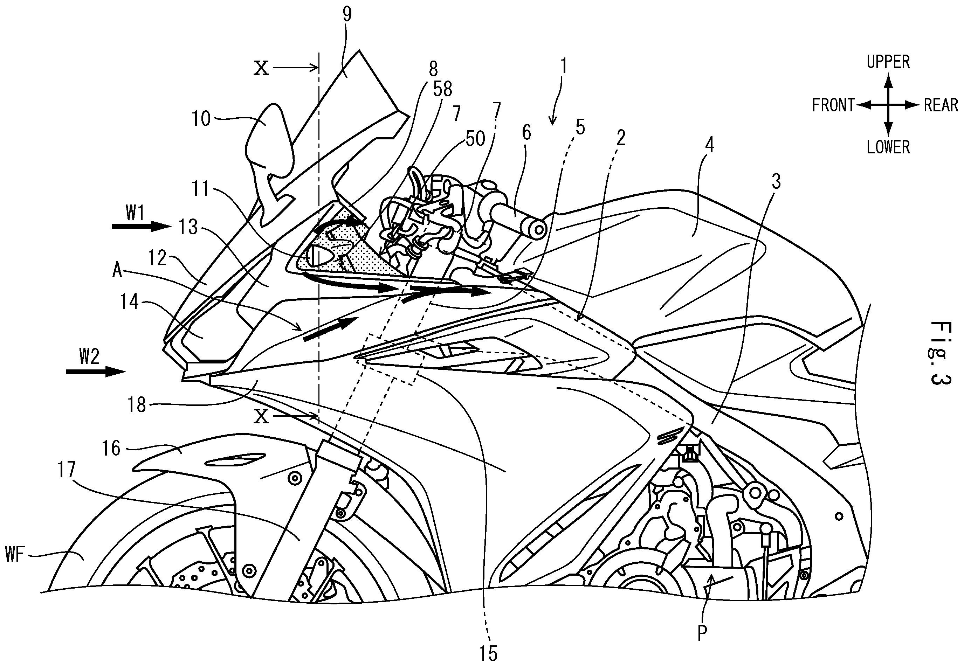

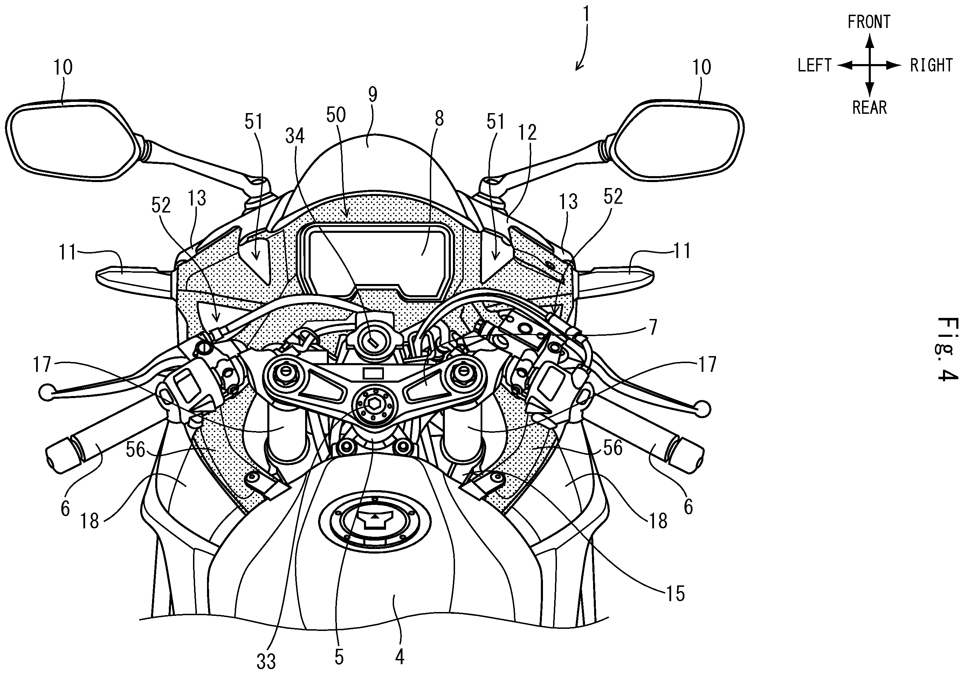

FIG. 3 is a partially enlarged left side view of the motorcycle 1. FIG. 4 is a partially enlarged perspective view of the motorcycle 1 as viewed by occupant's eyes. The center cowl 12 at the center in the vehicle width direction is brought into contact with upper portions of the headlight 14, and is connected to the pair of left and right front cowls 13 which is brought into contact with the side portions of the headlights 14. The inner panel 50 (indicated by dots in the drawing) which supports the meter device 8 is formed in a shape having a large width extending to the left and right front cowls 13. The inner panel 50 has a pair of left and right rearwardly extending portions 56 which extends from both end portions of the inner panel 50, passes outside the front forks 17, and which is brought into contact with the fuel tank 4. In the inner panel 50 which is formed of a thin-plate-like member made of a synthetic resin or the like, a pair of left and right upper openings 51 and a pair of left and right lower openings 52 are formed respectively. The upper openings 51 are positioned outside the meter device 8 in the vehicle width direction, and the lower openings 52 are positioned behind and below the upper openings 51.

At the center of the top bridge 7 which supports upper ends of the front forks 17, a stem nut 33 is disposed. The stem nut 33 is fastened to an upper end of a steering stem which is pivotally supported on the head pipe 5 in a rotatable manner. A key cylinder 34 of a power source switch is disposed in front of the stem nut 33. The steering handlebar 6 which is clamped to the front forks 17 at lower portions of the top bridge 7 are disposed at positions behind and above the blinker lamps 11 which project outward in the vehicle width direction.

With reference to FIG. 3, exposed portions 58 which are not covered by the front cowl 13 are provided outside the inner panel 50 in the vehicle width direction. The exposed portions 58 have a planar surface directed toward the outside in the vehicle width direction so that the blinker lamps 11 can be easily mounted on or removed from the exposed portions 58.

The steering handlebar 6 supported on the lower portions of the top bridge 7 are disposed at positions behind the headlight 14 in the longitudinal direction of the vehicle body and above the headlight 14 in the vertical direction of the vehicle body as viewed in a side view of the vehicle body. The blinker lamp 11 is disposed between the headlight 14 and the steering handlebar 6 as viewed in a side view of the vehicle body. In the motorcycle 1 according to this embodiment, grip portions of the steering handlebar 6 is disposed outside the front cowl 13 in the vehicle width direction and hence, traveling air W1 is liable to easily impinge on the grip portions from a front side of the vehicle body. However, the traveling air W1 is diffused by the elongated blinker lamps 11 disposed in front of and below the steering handlebar 6 and hence, traveling air which directly impinges on the steering handlebar 6 can be reduced.

A bent portion A for guiding traveling air W2 from a front side of the vehicle body to an upper side and a rear side of the vehicle body is formed on the side cowls 18 which are connected to the lower portion of the front cowls 13 respectively. Due to the bent portions A, traveling air W2 flow toward an area in the vicinity of the steering handlebar 6 disposed behind and above the bent portions A. However, in this embodiment, the blinker lamps 11 are disposed above the bent portions A and hence, a flow path of traveling air directed from the bent portions A toward the steering handlebar 6 disposed behind and above the bent portions A can be dispersed by the blinker lamps 11. Accordingly, traveling air which is brought into contact with the steering handlebar 6 can be reduced.

By diffusing traveling air by the rear-view mirrors 10 disposed in front of and above the blinker lamps 11, traveling air which is brought into contact with the steering handlebar 6 can be also reduced.

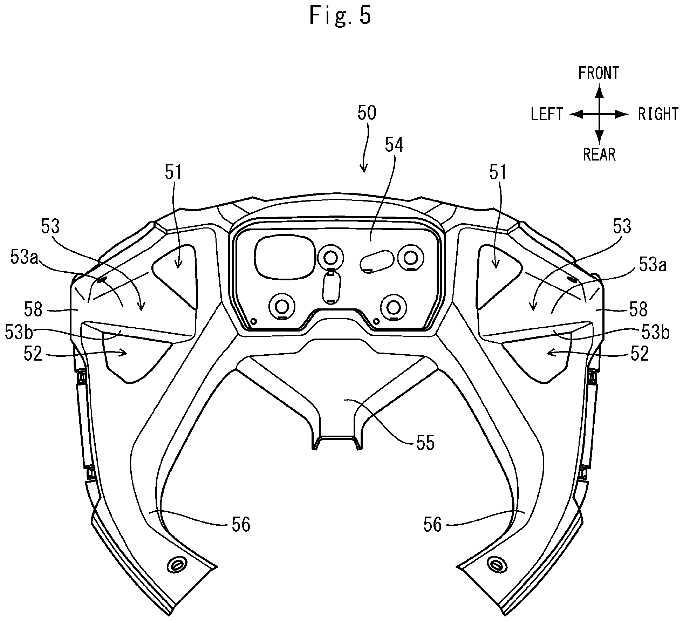

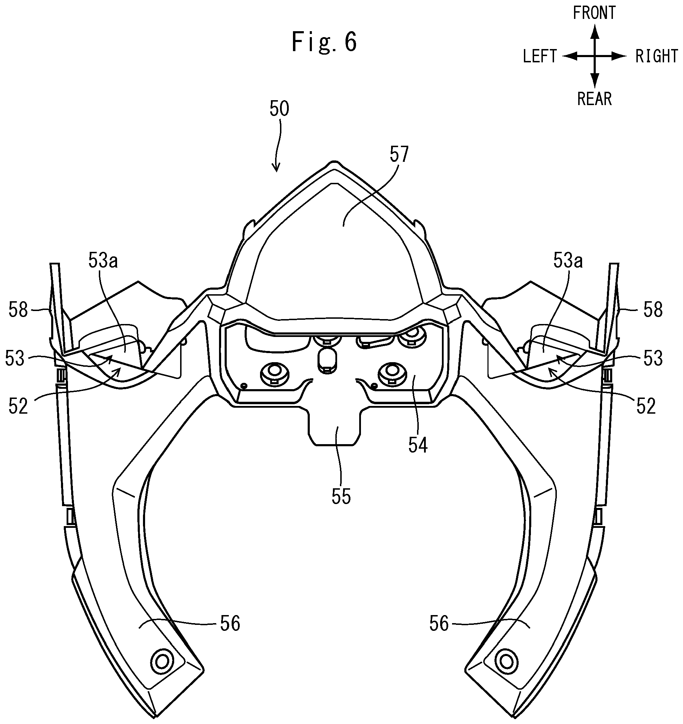

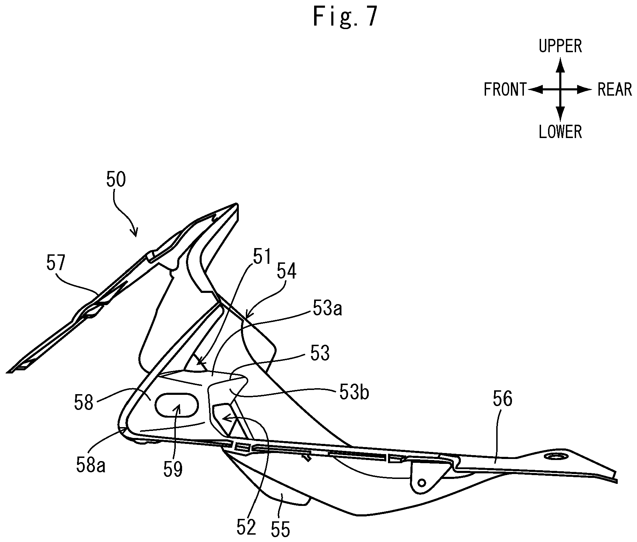

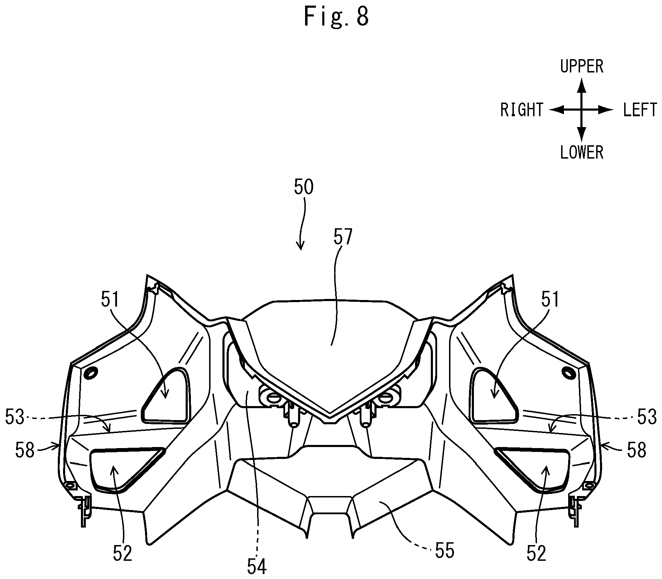

FIG. 5 is a view showing only the inner panel 50 as viewed from occupant's eyes. FIG. 6 is a plan view of the inner panel 50, FIG. 7 is a left side view of the inner panel 50, and FIG. 8 is a front view of the inner panel 50. The inner panel 50 is an integral molded product made of a darkly colored synthetic resin or the like. At the center of the inner panel 50 in the vehicle width direction, a mounting recessed portion 54 for mounting the meter device 8 is formed. On both end rear portions of the inner panel 50 which form large width portions and extend to both ends of the left and right front cowls 13, a pair of left and right rearwardly extending portions 56 is disposed. The pair of rearwardly extending portions 56 passes outside the front forks 17 and extends to the fuel tank 4. In front of the mounting recessed portion 54, a front cover 57 is disposed. The front cover 57 prevents wirings and the like from being visually recognized from a front side of the vehicle body through the wind screen 9. On a rear side of the mounting recessed portion 54, a rear cover 55 is disposed. The rear cover 55 prevents wirings and the like connected to the meter device 8 from being visually recognized from the occupant.

Upper openings 51 having an approximately triangular shape are formed in the inner panel 50 outside the meter device 8 in the vehicle width direction. A pair of left and right lower openings 52 is formed at positions behind and below the upper openings 51 and closer to outer sides of the inner panel 50 than the upper openings 51 in the vehicle width direction respectively. Between the upper opening 51 and the lower opening 52, a protruding portion 53 is formed. The protruding portion 53 is configured such that an upper surface 53a directed in an approximately horizontal direction and a rear surface 53b directed in an approximately vertical direction butt against each other at an approximately right angle. At the positions outside the protruding portions 53 in the vehicle width direction, the exposed portions 58 in each of which a mounting hole 59 for mounting the blinker lamp 11 is formed are disposed.

The exposed portion 58 is configured to have a peak portion 58a having an acute angle and directed frontward in the longitudinal direction of the vehicle body as viewed in the side view of the vehicle body. With such a configuration, the exposed portion 58 is formed in conformity with the shape of the front cowl 13 having a convex shape directed frontward in the longitudinal direction of the vehicle body. Accordingly, it is possible to impart a sharp impression on an external appearance of the exposed portion 58. Further, the mounting hole 59 by which the blinker lamp 11 is supported is formed in an elongated hole shape elongated in the longitudinal direction of the vehicle body. The blinker lamp 11 is formed of: a lamp body which uses an LED as a light source and has a shape gradually tapered toward the outside in the vehicle width direction; and a base portion which is made of rubber or the like. The blinker lamp 11 is fixed to the inner panel 50 by making the base portion engage with the mounting hole 59 and by fastening a retaining stay or the like from a back surface side of the blinker lamp 11. The shape of the mounting hole 59 is not limited to an elongated hole, and various modifications are considered with respect to the shape of the mounting hole 59.

The exposed portion 58 of the inner panel 50 has a planar shape directed toward the outside in the vehicle width direction and hence, there is no possibility that the mounting hole 59 is visually recognized by a rider also when the blinker lamp 11 is removed. With such a configuration, compared to a case where the mounting hole 59 is formed in an exterior part such as a front cowl, the mounting hole 59 becomes inconspicuous also when the motorcycle 1 is visually recognized from the outside of the vehicle body, and there is no possibility that the mounting hole 59 affects a flow straightening effect of the exterior part.

The protruding portion 53 formed of the upper surface 53a and the rear surface 53b can enhance rigidity thereof due to its shape. Further, the protruding portion 53 is connected to an upper end and a rear end of the exposed portion 58 thus forming a box-shaped corner portion. With such a configuration, rigidity of the protruding portion 53 including the periphery of the mounting hole 59, the periphery of the upper opening 51 and the periphery of the lower opening 52 is enhanced. Due to the combination of the protruding portion 53 and the upper and lower openings 51, 52, it is possible to impart a stereoscopic effect on the inner panel 50 thus also enhancing an external appearance of the inner panel 50.

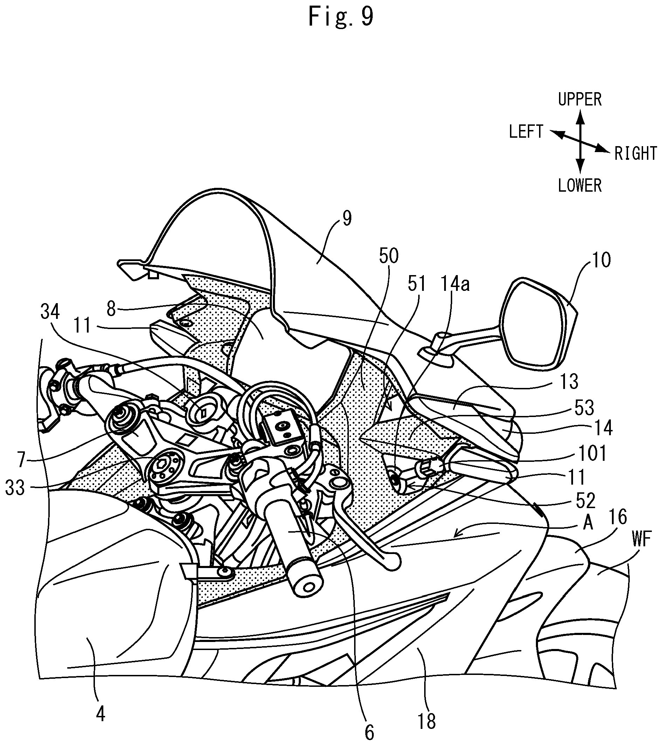

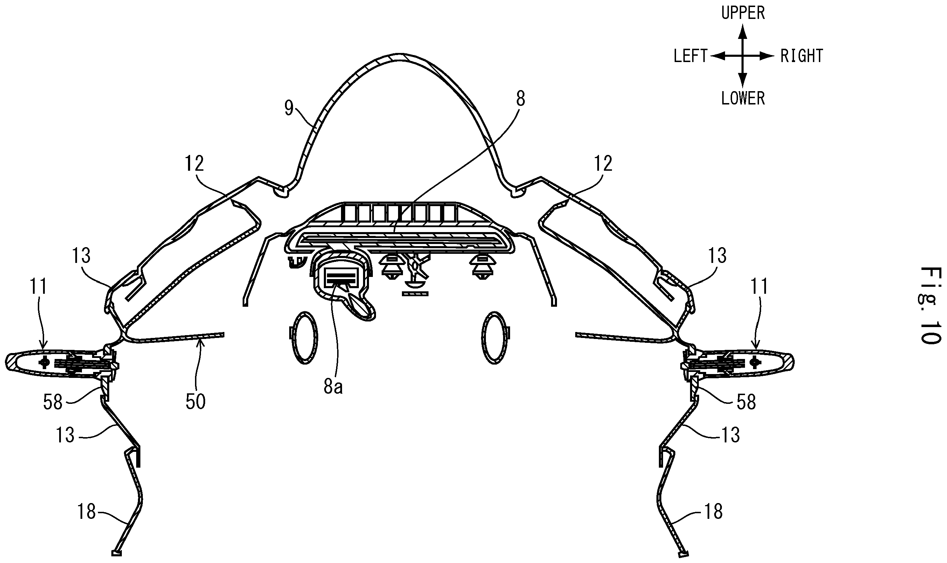

FIG. 9 is a partially enlarged perspective view of the motorcycle 1. FIG. 10 is a cross-sectional view taken along a line X-X in FIG. 3. The left and right lower openings 52 disposed behind the blinker lamps 11 have a function of realizing the reduction of weight and enhancement of design property. Further, the lower openings 52 can be used as maintenance openings for allowing a tool 101 such as a driver to get access to an optical axis adjustment mechanism 14a disposed on a back surface of the headlight 14 therethrough. Upper and lower edges of each exposed portion 58 are supported by an edge portion of the front cowl 13 on an outer side in the vehicle width direction. At the position close to the center of the inner panel 50 in the vehicle width direction, the exposed portion 58 is supported by the center cowl 12. A connector 8a of a harness concealed by the front cover 57 from a front side of the harness is connected to the back surface side of the meter device 8.

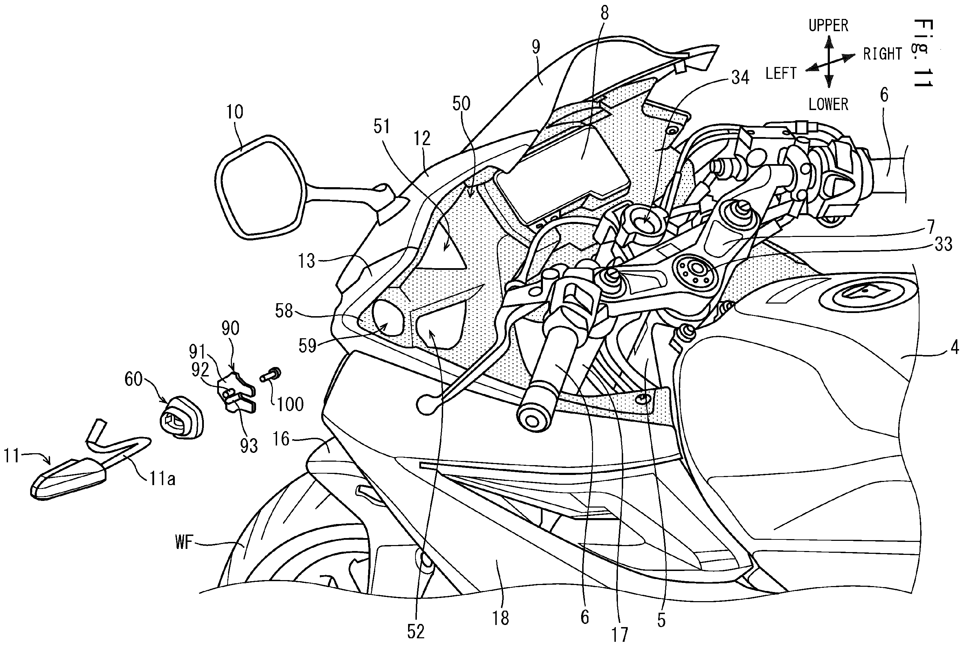

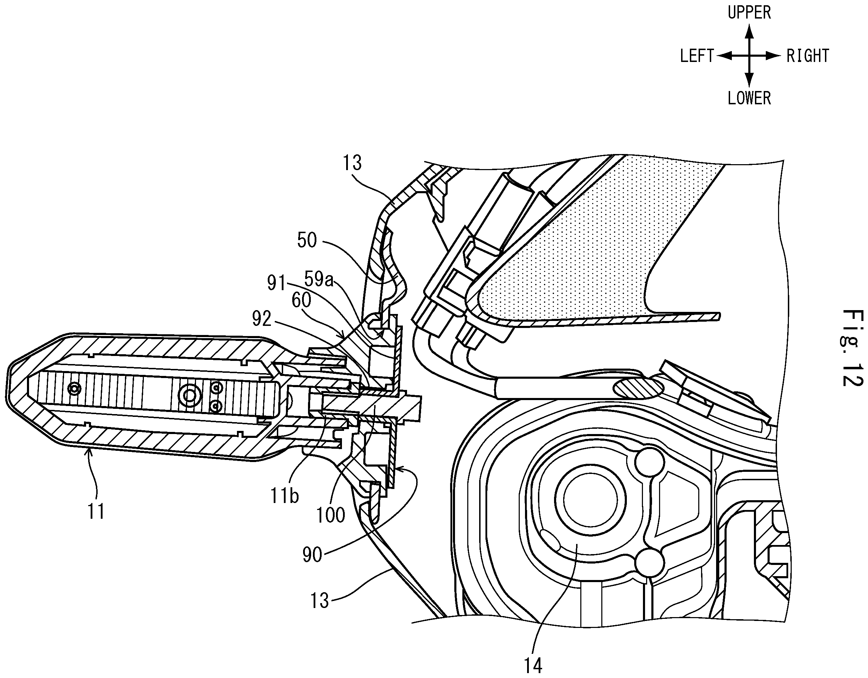

FIG. 11 is an enlarged perspective view of the steering handlebar 6 and parts around the steering handlebar 6. FIG. 12 is a cross-sectional view of a mounting portion of the blinker lamp 11. The blinker lamp 11 to which a power supply harness 11a is provided is mounted in the mounting hole 59 by way of an elastic member 60 made of rubber or the like. In the elastic member 60, a through hole through which the power supply harness 11a passes, and a through hole through which a fastening member 100 such as a bolt passes are formed. Mounting of the blinker lamp 11 is performed by making an end portion of the blinker lamp 11 on an inner side in the vehicle width direction engage with the elastic member 60 and by making an end portion of the elastic member 60 on an inner side in the vehicle width direction engage with the mounting hole 59 of the inner panel 50. With such an operation, an inner peripheral surface 59a of the mounting hole 59 is accommodated in a circumferential groove formed on the elastic member 60. Then, by bringing a fixing fitting 90 formed of a metal-made thin plate member into contact with the inner panel 50 from the inside of the inner panel 50, the blinker lamp 11 is fixed by the fastening member 100. With the use of the fixing fitting 90, it is possible to make the blinker lamp 11 difficult to be pulled out to the outside in the vehicle width direction after the fastening member 100 is threadedly engaged with the blinker lamp 11.

A pipe portion 92 through which the fastening member 100 passes and a semispherical cylinder guide 93 which guides the power supply harness 11a are formed on a body portion 91 of the fixing fitting 90. A female threaded member 11b with which the fastening member 100 is threadedly engaged is formed on the end portion of the blinker lamp 11 on the inner side in the vehicle width direction by insert molding.

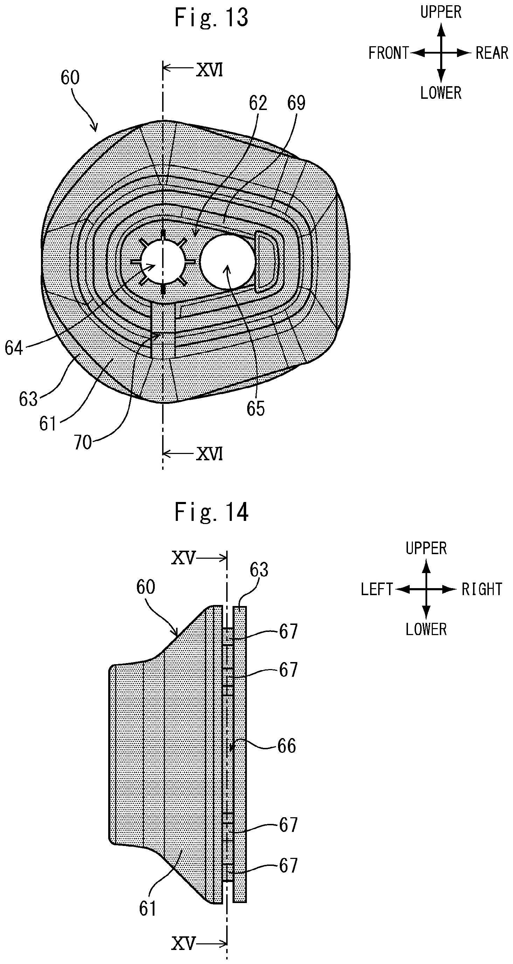

FIG. 13 is a left side view of the elastic member 60 on a left side in the vehicle width direction. FIG. 14 is a back surface view of the elastic member 60. The elastic member 60 is configured such that the elastic member 60 has a body portion 61 having a shape gradually enlarged toward the inside in the vehicle width direction, and a circumferential groove 66 which engages with the mounting hole 59 is disposed between the body portion 61 and a thin-plate-like flange portion 63 which is formed on an inner side in the vehicle width direction. By making the flange portion 63 easily deformable by adopting such the elastic member 60, an operation of mounting the elastic member 60 in the mounting hole 59 can be facilitated.

In the left side view of FIG. 13, a front through hole 64 through which the pipe portion 92 of the fixing fitting 90 passes and a rear through hole 65 through which the semispherical cylinder guide 93 passes are formed in a bottom portion 62 at an approximately center of the elastic member 60. On the periphery of the bottom portion 62, an upright wall 69 for positioning the blinker lamp 11 is formed. A cutout 70 which functions as a drain hole is formed in the upright wall 69 at the position below the front through hole 64.

According to the elastic member 60 of this embodiment, it is possible to protect the blinker lamp 11 from vibrations generated during traveling. Further, by adopting the configuration where the circumferential groove 66 formed on the elastic member 60 engages with the mounting hole 59 and hence, positioning of the blinker lamp 11 and mounting and removal of the blinker lamp 11 can be performed easily. Engaging protrusions 67 which form a plurality of engaging portions protruding toward the outer side in a radial direction are formed on a bottom surface 66a of the circumferential groove 66.

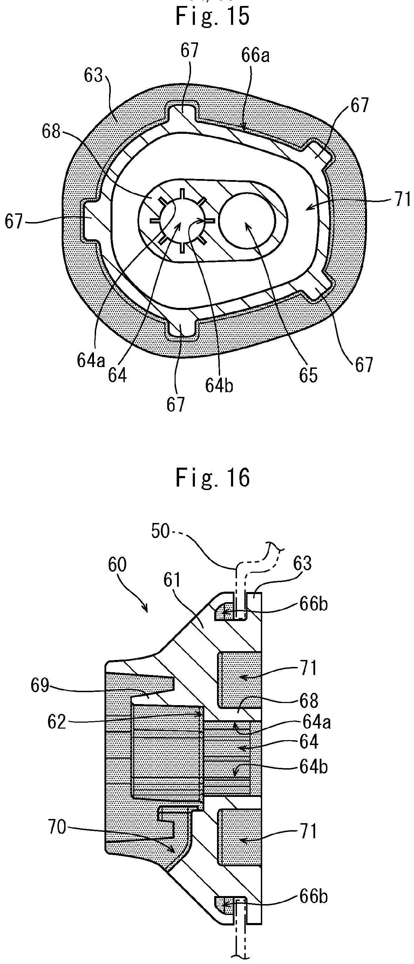

FIG. 15 is a cross-sectional view taken along a line XV-XV in FIG. 14. FIG. 16 is a cross-sectional view taken along a line XVI-XVI in FIG. 13. The bottom surface 66a of the circumferential groove 66 is formed so as to define a predetermined gap between the inner peripheral surface 59a of the mounting hole 59 and the bottom surface 66a. That is, the circumferential groove 66 is formed smaller than the mounting hole 59. In this embodiment, five engaging protrusions 67 in total are formed on the bottom surface 66a of the circumferential groove 66, and distal end portions of the engaging protrusions 67 are formed to be brought into contact with the inner peripheral surface 59a of the mounting hole 59.

With such a configuration, the elastic member 60 can be positioned and, at the same time, when an external force is applied to the blinker lamp 11 from the outside in the vehicle width direction, an engagement state between the elastic member 60 and the mounting hole 59 is easily released. With such a configuration, when an external force is applied to the blinker lamp 11 from the outside in the vehicle width direction, the blinker lamp easily retracts toward the inside in the vehicle width direction and hence, the blinker lamp 11 can be protected.

A plurality of slits 64b extending toward the outside in the radial direction are formed in an inner peripheral surface 64a of the front through hole 64 (in this embodiment, eight slits 64b). With such a configuration, the inner peripheral surface 64a of the front through hole 64 can be easily deformed so that a force applied to the blinker lamp 11 when an external force is applied to the blinker lamp 11 can be easily released.

With reference to FIG. 16, a recessed portion 66b is formed on a side surface of the circumferential groove 66 which is disposed on the outer side in the vehicle width direction and is contiguously formed with the bottom surface 66a by decreasing a wall thickness of the side surface. Due to the formation of the recessed portion 66b, when an external force is applied to the blinker lamp 11 from the outside in the vehicle width direction, it is possible to make the portion of the circumferential groove 66 on the outer side in the vehicle width direction easily deformable. Accordingly, it is possible to protect the blinker lamp 11 by smoothly moving the blinker lamp 11 toward the inside in the vehicle width direction. The recessed portion 66b is disposed at the position where the recessed portion 66b cannot be visually recognized from the outside when the elastic member 60 engages with the mounting hole 59. The recessed portion 66b can adjust rigidity of the elastic member 60 without affecting an external appearance of the motorcycle 1.

By forming a wall-thickness reduced portion 71 around the front through hole 64 and the rear through hole 65 toward the inside in the vehicle width direction, an inner raised wall 68 is formed. By forming the wall-thickness reduced portion 71, the reduction of weight of the elastic member 60 can be realized and, at the same time, ease of deformation of the blinker lamp 11 when an external force is applied to the blinker lamp 11 can be enhanced.

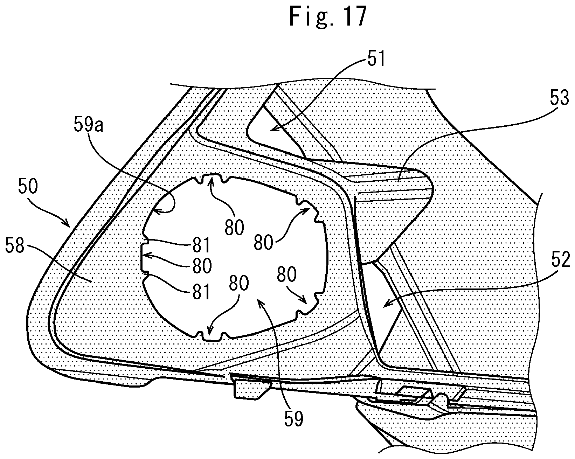

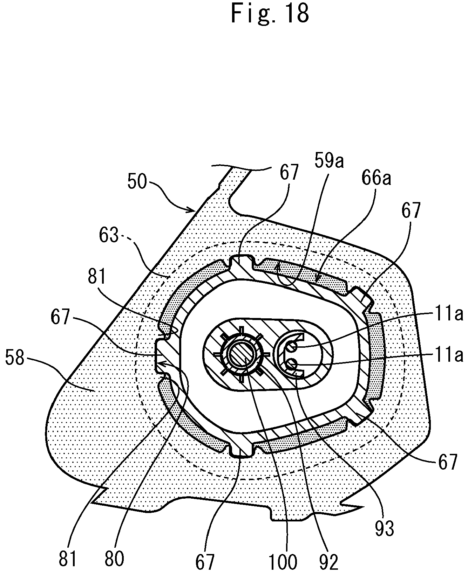

FIG. 17 is an enlarged view of the mounting hole 59 formed in the inner panel 50. FIG. 18 is a partially cross-sectional view showing a state where the elastic member 60 is mounted in the mounting hole 59. As described above, the inner peripheral surface 59a of the mounting hole 59 is formed to have a slightly large size so as to form a predetermined gap between the inner peripheral surface 59a and the bottom surface 66a of the circumferential groove 66. On the inner peripheral surface 59a, holding protrusions 81 which form a pair of holding portions are formed at positions corresponding to the engaging protrusions 67 of the elastic member 60 such that a center surface 80 is sandwiched between the holding protrusions 81.

With reference to FIG. 18, when the circumferential groove 66 of the elastic member 60 is made to engage with the predetermined position of the mounting hole 59, the engaging protrusions 67 are held in a state where the engaging protrusion 67 is sandwiched between the pair of holding protrusions 81. An end surface of the engaging protrusion 67 on the outside in the radial direction is brought into contact with the center surface 80 sandwiched between the pair of holding protrusions 81, and the holding protrusions 81 are brought into contact with both side surfaces of the engaging protrusion 67.

With such a configuration, by making the elastic member 60 and the mounting hole 59 engage with each other using the engagement relationship between the engaging protrusions 67 and the holding protrusions 81, it is possible to provide the configuration where both the elastic member 60 and the mounting hole 59 can be positioned and, at the same time, when an external force is applied to the blinker lamp 11 from the outside in the vehicle width direction, the engagement state between the elastic member 60 and the mounting hole 59 can be easily released. Accordingly, when an external force is applied to the blinker lamp 11 from the outside in the vehicle width direction, the blinker lamp 11 easily retracts toward the inside in the vehicle width direction thus protecting the blinker lamp 11.

According to the blinker lamp mounting structure of the saddled vehicle of the present invention, the mounting hole 59 of the blinker lamp 11 is formed on the exposed portion 58 of the inner panel 50 which is not covered by the front cowl 13 as viewed in the side view of the vehicle body and hence, when the blinker lamp 11 is removed, the mounting hole 59 becomes inconspicuous thus maintaining an external appearance of the motorcycle 1. Further, it is possible to prevent a flow straightening effect of the cowling from being changed by the mounting hole 59.

The blinker lamp 11 is supported on the mounting hole 59 by way of the elastic member 60, and the circumferential groove 66 which engages with the mounting hole 59 is formed on the elastic member 60. As a result, the blinker lamp 11 can be supported by the elastic member 60 thus protecting the blinker lamp 11 from vibrations. Further, by adopting the configuration where the circumferential groove 66 formed on the elastic member 60 engages with the mounting hole 59, positioning of the elastic member 60 and mounting and removal of the elastic member 60 on and from the mounting hole 59 can be performed easily.

The configuration of the motorcycle, the shapes and the structures of the front cowl, the center cowl and the side cowl, the shape and the structure of the inner panel, the shape and the structure of the blinker panel, shapes and the arrangement of the exposed portion and the mounting hole, the shape and the arrangement of the protruding portion, the shapes and arrangement of the upper opening and the lower opening, the configuration of the meter device, the shapes of the mounting hole and the elastic member, the shapes, the arrangement and the number of the engaging protrusions and the holding protrusions, the shapes of the recessed portion and the circumferential groove of the elastic member, a ratio in size between the mounting hole and the circumferential groove and the like are not limited to the above-mentioned embodiment, and various modifications are conceivable. For example, the lamp body of the blinker lamp may use an incandescent lamp bulb as a light source. The mounting hole may be a bottomed recessed portion in which a threaded hole is formed in place of the through hole. The application of the blinker lamp mounting structure according to the present invention is not limited to the motorcycle, and the blinker lamp mounting structure according to the present invention is also applicable to a three-wheeled saddled vehicle and a four-wheeled saddled vehicle having an inner panel behind a cowling for straightening traveling air.

### Explanation of sign

1...motorcycle (saddled vehicle), 6...steering handlebar, 8...meter device, 12...center cowl, 11...blinker lamps, 13...front cowl, 14...headlight, 17...front forks, 18...side cowl, 50...inner panel, 51...upper openings, 52...lower openings, 53...protruding portion, 53a...upper surface, 53b...rear surface, 54...mounting recessed portion, 55...rear cover, 56...rearwardly extending portion, 57...front cover, 58...exposed portions, 58a...peak portion, 59...mounting hole, A...bent portion, 59a...inner peripheral surface of the mounting hole, 60...elastic member, 61...body portion, 63...flange portion, 64...front through hole (through hole), 64a...inner peripheral surface 64a of the through hole, 64b...slit, 65...rear through hole, 66... circumferential groove, 66a...bottom surface of the circumferential groove, 66b...recessed portion, 67...engaging protrusions (engaging portion), 81...holding protrusion (holding portion), 100...fastening member

## Claims

1. A blinker lamp mounting structure of a saddled vehicle applied to a saddled vehicle (1) having a front cowl (13) disposed in contact with an outer edge of a headlight (14), an inner panel (50) disposed in a vicinity of a back surface side of the front cowl (13) and supporting a meter device (8), and a pair of left and right blinker lamps (11),
**characterized in that** an exposed portion (58) which is not covered by the front cowl (13) as viewed in a side view of a vehicle body is formed on the inner panel (50), and
a mounting hole (59) of the blinker lamp (11) is formed in the exposed portion (58).

2. The blinker lamp mounting structure of a saddled vehicle according to claim 1, wherein a protruding portion (53) formed by making two flat surfaces (53a,53b) butt against each other is disposed in a vicinity of the mounting hole (59) of the inner panel (50).

3. The blinker lamp mounting structure of a saddled vehicle according to claim 1 or 2, wherein the exposed portion (58) is configured to have a peak portion (58a) having an acute angle and directed toward a front side of the vehicle body as viewed in the side view of the vehicle body.

4. The blinker lamp mounting structure of a saddled vehicle according to any one of claims 1 to 3,
wherein a steering handlebar (6) for steering a front wheel (WF) of the saddled vehicle (1) is disposed at a position behind the headlight (14) in a longitudinal direction of the vehicle body and above the headlight (14) in a vertical direction of the vehicle body, and
the blinker lamp (11) is disposed between the headlight (14) and the steering handlebar (6) as viewed in the side view of the vehicle body.

5. The blinker lamp mounting structure of a saddled vehicle according to claim 4, wherein a bent portion (A) for guiding traveling air (W) from a front side of the vehicle body upward and rearward is formed below the blinker lamps (11).

6. The blinker lamp mounting structure of a saddled vehicle according to claim 2, wherein a pair of left and right openings (52) is formed on a rear side of the protruding portions (53) in a longitudinal direction of the vehicle body.

7. The blinker lamp mounting structure of a saddled vehicle according to any one of claims 1 to 6, wherein the exposed portion (58) is formed in a planar shape directed toward an outside in a vehicle width direction.

8. The blinker lamp mounting structure of a saddled vehicle according to any one of claims 1 to 7,
wherein the blinker lamp (11) is supported by the mounting hole (59) by way of an elastic member (60),
a circumferential groove (66) which engages with the mounting hole (59) is formed in the elastic member (60),
the circumferential groove (66) is formed smaller than the mounting hole (59),
a plurality of engaging portions (67) which extend toward an outside in a radial direction are formed on a bottom surface (66a) of the circumferential groove (66), and
a plurality of holding portions (81) which extend toward an inside in a radial direction and are brought into contact with the engaging portions (67) are formed on an inner peripheral surface (59a) of the mounting hole (59).

9. The blinker lamp mounting structure of a saddled vehicle according to claim 8, wherein a recessed portion (66b) is formed on at least a portion of a side surface of the circumferential groove (66) on an outer side in the vehicle width direction contiguously formed with a bottom surface (66a) of the circumferential groove (66).

10. The blinker lamp mounting structure of a saddled vehicle according to claim 8 or 9,
wherein a through hole (64) through which a fastening member (100) for supporting the blinker lamp (11) passes is formed in the elastic member (60), and
a plurality of slits (64b) extending toward an outside in a radial direction are formed on an inner peripheral surface (64a) of the through hole (64).

11. The blinker lamp mounting structure of a saddled vehicle according to any one of claims 8 to 10, wherein the circumferential groove (66) formed in the elastic member (60) is formed between a body portion (61) which holds the blinker lamp (11) on an outer side in the vehicle width direction and a thin-plate-like flange portion (63) disposed on an inner side in the vehicle width direction.

## Patentansprüche

1. Blinkerleuchtenmontagestruktur eines Sattelsitzfahrzeugs, die auf ein Sattelsitzfahrzeug (1) angewendet wird, das eine vordere Verkleidung (13), die in Kontakt mit einer Außenkante eines Scheinwerfers (14) angeordnet ist, eine innere Verkleidungsplatte (50), die in der Umgebung einer Rückflächenseite der vorderen Verkleidung (13) angeordnet ist und eine Instrumententafelvorrichtung (8) hält, und ein Paar von linken und rechten Blinkerleuchten (11) aufweist,
**dadurch gekennzeichnet, dass** ein freigelegter Bereich (58), der in einer Seitenansicht der Fahrzeugkarosserie betrachtet nicht durch die vordere Verkleidung (13) verkleidet ist, an der inneren Verkleidungsplatte (50) ausgebildet ist, und eine Befestigungsöffnung (59) der Blinkerleuchte (11) in dem freigelegten Bereich (58) ausgebildet ist.

2. Blinkerleuchtenmontagestruktur eines Sattelsitzfahrzeugs nach Anspruch 1, wobei ein hervorstehender Bereich (53), der ausgebildet ist, indem zwei flache Flächen (53a, 53b) gegeneinander zum Anliegen gebracht werden, in einer Umgebung der Montageöffnung (59) der inneren Verkleidungsplatte (50) angeordnet ist.

3. Blinkerleuchtenmontagestruktur eines Sattelsitzfahrzeugs nach Anspruch 1 oder 2, wobei der freigelegte Bereich (58) ausgestaltet ist, einen Spitzenbereich (58a) mit einem spitzen Winkel zu haben und der in Richtung einer Vorderseite der Fahrzeugkarosserie in der Seitenansicht der Fahrzeugkarosserie betrachtet ausgerichtet ist.

4. Blinkerleuchtenmontagestruktur eines Sattelsitzfahrzeugs nach einem der Ansprüche 1 bis 3, wobei
ein Lenkergriff (6) zum Lenken eines Vorderrads (WF) des Sattelsitzfahrzeugs (1) an einer Position hinter dem Scheinwerfer (14) in einer Längsrichtung der Fahrzeugkarosserie und über dem Scheinwerfer (14) in einer vertikalen Richtung der Fahrzeugkarosserie angeordnet ist, und
in der Seitenansicht der Fahrzeugkarosserie betrachtet die Blinkerleuchte (11) zwischen dem Scheinwerfer (14) und dem Lenkergriff (6) angeordnet ist.

5. Blinkerleuchtenmontagestruktur eines Sattelsitzfahrzeugs nach Anspruch 4, wobei ein gebogener Bereich (A) zum Führen der Fahrtluft (W) von einer Vorderseite der Fahrzeugkarosserie nach oben und hinten unter den Blinkerleuchten (11) ausgebildet ist.

6. Blinkerleuchtenmontagestruktur eines Sattelsitzfahrzeugs nach Anspruch 2, wobei ein Paar von linken und rechten Öffnungen (52) an einer Rückseite der hervorstehenden Bereiche (53) in einer Längsrichtung der Fahrzeugkarosserie ausgebildet ist.

7. Blinkerleuchtenmontagestruktur eines Sattelsitzfahrzeugs nach einem der Ansprüche 1 bis 6, wobei der freigelegte Bereich (58) in einer planaren Form ausgebildet ist, die in einer Fahrzeugbreitenrichtung zu einer Außenseite hin ausgerichtet ist.

8. Blinkerleuchtenmontagestruktur eines Sattelsitzfahrzeugs nach einem der Ansprüche 1 bis 7, wobei
die Blinkerleuchte (11) von der Montageöffnung (59) durch ein elastisches Element (60) gehalten wird,
eine Umfangsnut (66), die in die Montageöffnung (59) eingreift, im elastischen Element (60) ausgebildet ist,
die Umfangsnut (66) kleiner als die Montageöffnung (59) ausgebildet ist,
eine Vielzahl von Eingriffsbereichen (67), die in Richtung einer Außenseite in einer radialen Richtung verlaufen, an einer Bodenfläche (66a) der Umfangsnut (66) ausgebildet sind, und
eine Vielzahl von Haltebereichen (81), die in Richtung einer Innenseite in einer radialen Richtung verlaufen und in Kontakt mit den Eingriffsbereichen (67) gebracht werden, an einer Innenumfangsfläche (59a) der Montageöffnung (59) ausgebildet sind.

9. Blinkerleuchtenmontagestruktur eines Sattelsitzfahrzeugs nach Anspruch 8, wobei ein ausgesparter Bereich (66b) an wenigstens einem Bereich einer Seitenfläche der Umfangsnut (66) an einer Außenseite in der Fahrzeugbreitenrichtung ausgebildet ist, die fortlaufend mit einer Bodenfläche (66a) der Umfangsnut (66) ausgebildet ist.

10. Blinkerleuchtenmontagestruktur eines Sattelsitzfahrzeugs nach Anspruch 8 bis 9, wobei eine Durchgangsöffnung (64), durch die ein Befestigungselement (100) zum Halten der Blinkerleuchte (11) hindurchgeht, im elastischen Element (60) ausgebildet ist, und
eine Vielzahl von Schlitzen (64b), die in Richtung einer Außenseite in einer radialen Richtung verlaufen, an einer Innenumfangsfläche (64a) der Durchgangsöffnung (64) ausgebildet sind.

11. Blinkerleuchtenmontagestruktur eines Sattelsitzfahrzeugs nach einem der Ansprüche 8 bis 10, wobei die im elastischen Element (60) ausgebildete Umfangsnut (66) zwischen einem Körperbereich (61), der die Blinkerleuchte (11) an einer Außenseite in der Fahrzeugbreitenrichtung hält, und einem dünnen plattenartigen Flanschbereich (63), der an einer Innenseite in der Fahrzeugbreitenrichtung angeordnet ist, ausgebildet ist.

## Revendications

1. Structure de montage de feu clignotant d'un véhicule à enfourcher appliquée à un véhicule à enfourcher (1) ayant un capot avant (13) disposé en contact avec un bord extérieur d'un phare avant (14), un panneau intérieur (50) disposé aux alentours d'un côté de surface arrière du capot avant (13) et supportant un compteur (8), et une paire de feux clignotants gauche et droit (11),
**caractérisée en ce qu'**une partie exposée (58) qui n'est pas recouverte par le capot avant (13) telle que vue dans une vue latérale d'une carrosserie de véhicule est formée sur le panneau intérieur (50), et
un trou de montage (59) du feu clignotant (11) est formé dans la partie exposée (58).

2. Structure de montage de feu clignotant d'un véhicule à enfourcher selon la revendication 1, dans laquelle une partie saillante (53) formée par la création de deux surfaces plates (53a, 53b) en butée l'une contre l'autre est disposée aux alentours du trou de montage (59) du panneau intérieur (50).

3. Structure de montage de feu clignotant d'un véhicule à enfourcher selon la revendication 1 ou 2, dans laquelle la partie exposée (58) est configurée pour avoir une partie crête (58a) ayant un angle aigu et dirigée vers un côté avant de la carrosserie de véhicule comme on le voit sur la vue latérale de la carrosserie de véhicule.

4. Structure de montage de feu clignotant d'un véhicule à enfourcher selon l'une quelconque des revendications 1 à 3,
dans laquelle un guidon (6) pour diriger une roue avant (WF) du véhicule à enfourcher (1) est disposé dans une position derrière le phare avant (14) dans une direction longitudinale de la carrosserie de véhicule et au-dessus du phare avant (14) dans une direction verticale de la carrosserie de véhicule, et
le feu clignotant (11) est disposé entre le phare avant (14) et le guidon (6) comme on le voit sur la vue latérale de la carrosserie de véhicule.

5. Structure de montage de feu clignotant d'un véhicule à enfourcher selon la revendication 4, dans laquelle une partie coudée (A) pour guider l'air de déplacement (W) provenant d'un côté avant de la carrosserie de véhicule vers le haut et vers l'arrière est formée sous les feux clignotants (11).

6. Structure de montage de feu clignotant d'un véhicule à enfourcher selon la revendication 2, dans laquelle une paire d'ouvertures gauche et droite (52) sont formées sur un côté arrière des parties saillantes (53) dans une direction longitudinale de la carrosserie de véhicule.

7. Structure de montage de feu clignotant d'un véhicule à enfourcher selon l'une quelconque des revendications 1 à 6, dans laquelle la partie exposée (58) est formée selon une forme planaire dirigée vers un extérieur dans une direction de largeur de véhicule.

8. Structure de montage de feu clignotant d'un véhicule à enfourcher selon l'une quelconque des revendications 1 à 7,
dans laquelle le feu clignotant (11) est supporté par le trou de montage (59) par le biais d'un élément élastique (60),
une rainure circonférentielle (66) qui entre en prise avec le trou de montage (59) est formée dans l'élément élastique (60),
la rainure circonférentielle (66) est formée plus petite que le trou de montage (59),
une pluralité de parties de mise en prise (67) qui s'étendent vers un extérieur dans une direction radiale sont formées sur une surface de fond (66a) de la rainure circonférentielle (66), et
une pluralité de parties de maintien (81) qui s'étendent vers un intérieur dans une direction radiale et sont amenées en contact avec les parties de mise en prise (67) sont formées sur une surface périphérique intérieure (59a) du trou de montage (59).

9. Structure de montage de feu clignotant d'un véhicule à enfourcher selon la revendication 8, dans laquelle une partie évidée (66b) est formée sur au moins une partie d'une surface latérale de la rainure circonférentielle (66) sur un côté extérieur dans la direction de largeur de véhicule formée de façon contiguë avec une surface de fond (66a) de la rainure circonférentielle (66).

10. Structure de montage de feu clignotant d'un véhicule à enfourcher selon la revendication 8 ou 9,
dans laquelle un trou traversant (64) à travers lequel passe un élément de fixation (100) pour supporter le feu clignotant (11) est formé dans l'élément élastique (60), et
une pluralité de fentes (64b) s'étendant vers un extérieur dans une direction radiale sont formées sur une surface périphérique intérieure (64a) du trou traversant (64).

11. Structure de montage de feu clignotant d'un véhicule à enfourcher selon l'une quelconque des revendications 8 à 10, dans laquelle la rainure circonférentielle (66) formée dans l'élément élastique (60) est formée entre une partie carrosserie (61) qui maintient le feu clignotant (11) sur un côté extérieur dans la direction de largeur de véhicule et une partie de bride en forme de plaque mince (63) disposée sur un côté intérieur dans la direction de largeur de véhicule.
